Europäisches Patentamt

European Patent Office

Office européen des brevets

(19)

(11) Publication number: **0 240 329**
A2

# (12) EUROPEAN PATENT APPLICATION

(21) Application number: 87302822.9

(22) Date of filing: 01.04.87

(51) Int. Cl.4: **G 10 L 5/06**

(30) Priority: 04.04.86 GB 8608288

(43) Date of publication of application:
07.10.87 Bulletin 87/41

(84) Designated Contracting States:
CH DE FR GB IT LI SE

(71) Applicant: **NATIONAL RESEARCH DEVELOPMENT CORPORATION**
101 Newington Causeway
London SE1 6BU (GB)

(72) Inventor: **Sedgwick, Nigel Charles**
Saracens 2 Fowlmere Road Thriplow
Royston Hertfordshire SG8 7QU (GB)

**Holmes, John Nicholas**
19 Maylands Drive Uxbridge
Middlesex UB8 1BH (GB)

(74) Representative: **Hasler, Christopher**
Patent Department National Research Development
Corporation 101 Newington Causeway
London SE1 6BU (GB)

(54) Noise compensation in speech recognition.

(57) In speech recognition it is advantageous to take account of noise levels both in recognition and training. In both processes signals reaching a microphone 10 are digitised and passed through a filter bank 13 to be separated into frequency channels. In training a noise estimator 18 and a masker 15 are used with a processor 17 to prepare template signals which are held in a store 16. In each region the template signals are made equal to the highest noise level in that region during the whole training process if below this level. In recognition the input signals in each region are made equal to the highest noise level in that region if below this level. "Distance" measurements for each region on which recognition is based depend on the levels of the template and input signals unless either is represented by noise when the relative levels determine how the distance shall be calculated.

Fig. 1

EP 0 240 329 A2

**Description**

NOISE COMPENSATION IN SPEECH RECOGNITION

The present invention relates to apparatus and methods for alleviating the effect of noise in sound recognition, particularly whole-word pattern matching in speech recognition using dynamic time warping (DTW).

In many recognizers incoming signals from a microphone are analysed by a bank of filters, implemented as electronic analogue filters, an integrated circuit signal processor equivalent or otherwise, to provide a spectral analysis of the input. The resulting signals are smoothed to provide estimates of the short term power spectrum (called frames) typically every 10 ms. These output signals are used in a recognition process.

Subsequently input spectra and template spectra, obtained while training a recognizer, are compared, usually be calculating a "distance" measure.

There are many applications of whole-word automatic speech recognition where the speaking environment has high levels of background noise. This background noise might be constant, but often has a spectrum which changes slowly with time.

In describing previous ways of alleviating the effect of noise and in describing the present invention the word "input" is used to mean the input to a speech recognizer during operational use, and "cell" to mean the level in a particular filter-bank channel in a particular frame, in either the input or a training token. Filter-bank analysis is assumed because methods of acoustic analysis that do not keep the different parts of the spectrum separate (e.g. linear predictive coding or cepstrum methods) are not so amenable to noise compensation. These other methods of acoustic analysis mix together noisy parts of the signal spectrum with components caused mainly by speech, and it is not then possible to identify which parts of the spectrum are contaminated by noise.

The background noise signal needs to be estimated as it varies with time. This can be done by using the microphone signal when no speech is present. It can also be done using a separate microphone which only gives the noise signal.

It has to be accepted that in conditions of high noise it is not possible in principle to distinguish between words that differ only in low-level regions of the spectrum, where they are seriously contaminated by noise. A method is therefore required which makes full use of any speech information in the high-level parts of the spectrum that can act as true evidence for word identity, but ignores any information that is too corrupted by noise to be useful.

In "A digital filter bank for spectral matching", D. H. Klatt, (Proc. IEEE Int. Conf. on Acoustics, Speech and Signal Processing, Philadelphia, PA, 1976, pp 573-576), Klatt recognized the difficulties of obtaining a useful spectral distance measure in the presence of noise, and advocated use of "noise masking" in conjunction with a filter-bank analyser. In this scheme a different composite noise mask is used for every pair of frames being compared. For each channel of each frame the mask is made equal to the higher of the noise levels associated with the template and input spectra. For each input or template cell below the mask of the corresponding channel, it is replaced by the mask value. The masked input and template spectra are then compared using a weighted squared Euclidean distance measure. With this scheme words for which the underlying speech is similar will always match well, but because they are both masked by the same values, no spurious distance will be derived from two noise-contaminated cells that by chance happen to have different noise levels. However, Klatt's scheme does not use all the available information. Consider the situation when two patterns being compared are associated with very different noise levels. If a cell from the high-noise pattern is just above the noise level, and is being compared with a cell near to the noise level of the low-noise pattern, the Klatt algorithm will yield a smaller distance than would be derived without masking. However, it is clear that the true distance between the underlying speech signals must be at least the distance between the unmasked cells.

Klatt's method is expressed in Table 1 below, where f is a cell input level, t is a template cell level and C is a composite mask level equal to the higher of the input and template noise levels.

TABLE 1

| Input | Template | Distance |
|---|---|---|
| Unmasked | Unmasked | $(f - t)^2$ |
| Masked | Unmasked | $(C - t)^2$ |
| Unmasked | Masked | $(f - C)^2$ |
| Masked | Masked | $0$ |

In an attempt to overcome the limitations and of Klatt's noise masking scheme, British Patent Application 2137791A (Bridle et al) describes a noise marking scheme for noise compensation. The method, like Klatt's, requires that a running estimate of the noise spectrum is maintained, both during training and operational use. As speech enters the analyser, each cell is marked as speech if it is above the current noise estimate for that channel, or as noise otherwise. This differs from Klatt's approach in that the frames are marked rather than masked, and this is done for the input frame according to the input noise estimate, and for the template frame according to the template noise estimate. In the subsequent matching (by a conventional DTW algorithm) the distance measure is calculated according to whether the input and template cells are marked as speech or noise. If the larger of the two cells being compared is marked as speech, the usual distance calculation (e.g. a squared Euclidean distance) is made. In this case, even if the lower cell is marked as noise, it is known that the distance must be at least the measured distance. When the larger cell is marked as noise, there is no evidence about the size of the difference between the underlying speech signals. Bridle et al ignore the measured distance in this case, and advocate adding a fixed non-zero "noise distance" to avoid the possibility of identical but noisy spectra giving a spurious perfect match.

Bridle et al's method is expressed in Table 2 where f and t are as for Table 1 and D is a constant noise distance chosen empirically.

TABLE 2

| Input | Template | Distance |
|---|---|---|
| Unmasked | Unmasked | $(f - t)^2$ |
| Masked | Unmasked | If $f > t$ then D else $(f - t)^2$ |
| Unmasked | Masked | If $t > f$ then D else $(f - t)^2$ |
| Masked | Masked | $D$ |

Bridle et al make better use of the available data than Klatt. However, if the template cell is unmarked but the input is marked, there is an undesirable discontinuity in the distance used when the template cell level crosses the input level.

According to a first aspect of the present invention there is provided a method of training a sound recognition system comprising preparing masked template signals from example sounds by respresenting sounds to be recognized by first or second types of signals in each region of the frequency spectrum at successive times, the first type being a signal level representative of the example sounds in each region where the signal is above the highest noise level encountered in that region during the whole training process, and the second type being a masking level representative of the said highest noise level where the signal in the region is below the said highest noise level.

The spectral regions are usually channels.

The schemes of Klatt and of Bridle et al are symmetrical, in that they do not treat the templates differently from the input in making the distance calculation. However, there is an inherent asymmetry that should be taken into account, in that all valid template frames are compared with each single input frame. If the noise level changes during training, the distance measures for the same input cell could differ spuriously between templates trained with different amounts of noise.

The first aspect of the invention has the advantage that this difficulty is largely overcome.

According to a second aspect of the present invention there is provided apparatus for use in processing signals derived from speech comprising

means for storing a plurality of masked template signals, each representing the frequency spectrum of a sound to be recognized and each represented by a masking level in every region where the highest noise level for that region found in preparing the template signals was greater than the input signals used in preparation, the masking level for each region being representative of the said highest noise level for that region,

means for estimating the input noise level,

means for deriving masked input signals during recognition by representing any region of the frequency spectrum of an input signal below noise level with a masking level which is representative of the noise level in that region, and

means for deriving a distance measure for each region of the frequency spectrum of input signals during recognition by comparing each region of each masked input signal with the corresponding region of the masked template signals according to the first of the following rules and at least one other of them, considering corresponding regions:-

(a) if both the masked input and template signals are represented by unmasked signal levels, the distance measure is derived from those unmasked levels.

(b) if the masked input and template signals are represented by a masking level and an unmasked signal level, respectively, and if the masking level is greater than the unmasked level then the distance measure is given a predetermined value, otherwise the distance measure is derived from the masking and unmasked levels,

(c) if the marked input and template signals are represented by an unmasked signal level and a masking level, respectively, the distance measure is derived from the unmasked and masking levels, and

(d) if both the masked and template signals are represented by masking levels, and if the input masking level is greater than the template masking level then the distance measure is given the same, or a different, predetermined value, otherwise the distance measure is derived from the masking levels.

The invention has the advantage that while the good features of the methods of Klatt and of Bridle et al are retained, some limitations of both methods are overcome, primarily because the templates are masked by the maximum noise level found during training.

Preferably all the above rules are applied in deriving the distance measure, and the predetermined values are the same and equal to zero.

The derivation of the distance measure from two levels may be carried out by squaring the difference between the two levels. The reasoning giving rise to rules (b), (c) and (d) now follows. If a template cell value is the result of noise there is no need to treat it specially even if it is greater than the input cell, because all competing template cells below the training noise threshold give the same distance, since the template signals are all masked with reference to the highest training noise cell levels. Those template cells that are above the noise level will then, correctly, make a different contribution to the distance. Thus the distance will be the same for each template when there is no evidence that the speech signals which produced the templates are different, but any reliable information that is available will be used. In the situation just outlined, the "noise distance" should preferably be zero, otherwise there will be an unwanted discontinuity in the distance measure as the template cell value crosses the input noise level.

The means for estimating the noise input level may comprise a separate microphone giving the noise signal alone or means for differentiating between noise only and noise plus speech on a single microphone.

The present invention also comprises a method corresponding to the second aspect of the invention.

Certain embodiments of the invention will now be described by way of example with reference to the accompanying drawings in which:-

Figure 1 is a block diagram of a speech recognizer employing an embodiment of the invention,

Figure 2(a) shows an input spectrum and associated noise spectrum,

Figure 2(b) shows a template spectrum and associated noise spectrum, and

Figure 2(c) shows how noise masking is carried out and how a distance measured is derived.

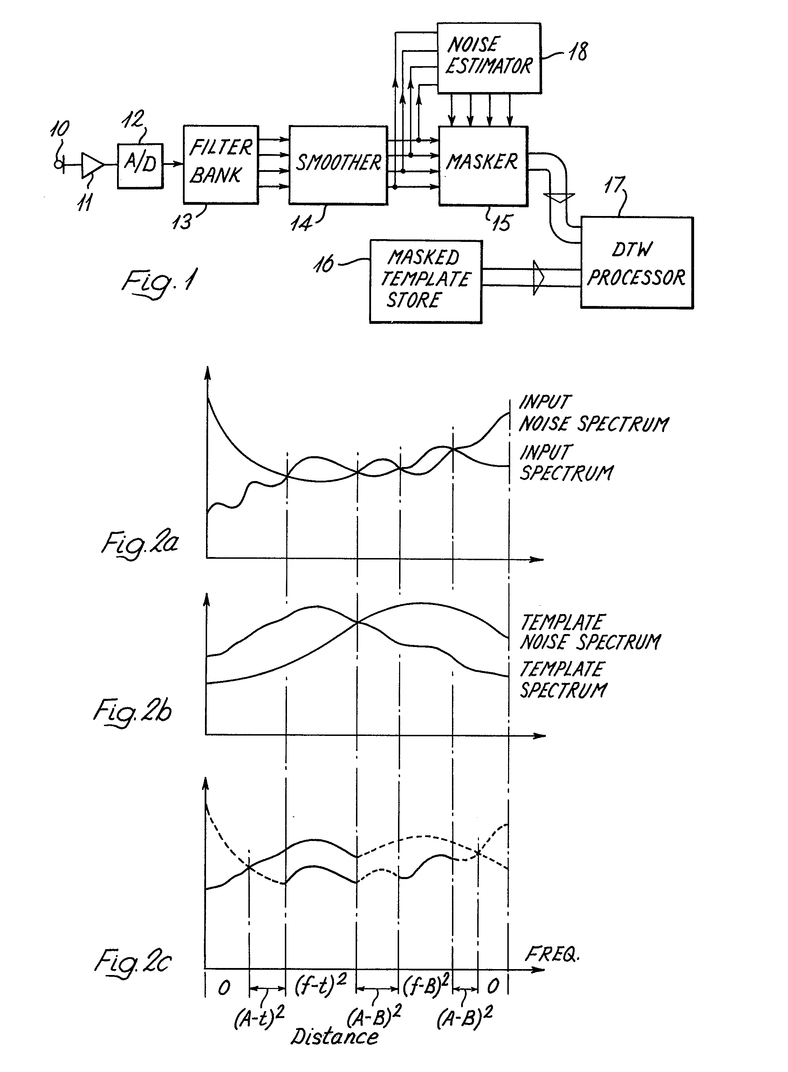

In Figure 1 a microphone 10 receives speech to be recognized and after passing through a non-linear amplifier 11 to allow for a wide dynamic range of input signals the resulting signals reach an analogue to digital converter (A/D) 12. A digital filter bank 13 provides output signals representative of the signal levels of signals in various portions of the frequency spectrum and although only four outputs are shown there are, in practice, usually between ten and twenty. Signals from each of the bandpass filters are passed to a smoother 14 providing output signals typically every 10 ms. Each of these longer periods is known as a frame and each smoother output (corresponding to a spectrum portion) is known as a channel level. A channel level for one frame is known as a cell.

Noise masking is now carried out in a masker circuit 15 where the input noise spectrum analysed by the components 10 to 14 and a noise estimator 18 in the absence of speech is compared with the input noise level of each channel of each frame when speech is being recognized. Examples of such spectra are shown in Figure 2(a) where the vertical axis represents signal level and the horizontal axis represents frequency and although shown continuously is in practice in this example made up of the filter bank outputs mentioned

4

0 240 329

above. Masking consists of substituting the noise spectrum for the input spectrum wherever the noise level is greater than the input level. Thus the masked input in each region of Figure 2(a) comprises the upper of the two lines in that region.

Masked templates are generated in previous training using for example the components 10 to 14 and 18, each template representing a spoken word. A spectrum such as that marked template spectrum in Figure 2(b) is produced in training as is a noise spectrum which is formed from the maximum noise level in each channel found during training. An example of such a spectrum is marked template noise spectrum in Figure 2(b). A masked template spectrum is then formed for each word to be recognized by taking the greater of the two levels in each channel and stored in a store 16.

Recognition is carried out by a DTW processor 17 which is conventional except that the distance measure it employs is calculated according to Table 3 below, where f and t have the values previously used, A and B are the noise levels in input and template cells, respectively.

TABLE 3

| Input | Template | Distance |
|---|---|---|
| Unmasked | Unmasked | $(f - t)^2$ |
| Masked | Unmasked | If $A > t$ then 0 else $(A - t)^2$ |
| Unmasked | Masked | $(f - B)^2$ |
| Masked | Masked | If $A > B$ then 0 else $(A - B)^2$ |

Figure 2(c) further illustrates the distance measure calculation and shows unmasked levels by firm lines and masked levels by dashed lines. This figure is divided into regions and the distance measure for each region is given below the horizontal axis.

The invention may be put into practice in many other ways than those specifically mentioned. For example some or all of the separate circuits shown may be replaced by one or more microprocessors, especially signal processor integrated circuits. Many variations and substitutes for the components 10 to 14 and 17 are known and most of these can be employed in putting the invention into practice.

**Claims**

1. A method of training a sound recognition system comprising preparing masked template signals from example sounds by representing sounds to be recognized by first or second types of signals in each region of the frequency spectrum at successive times, the first type being a signal level representative of the example sounds in each region where the signal is above a noise level and the second type being a masking level representative of the said noise level where the signal in the region is below the said noise level, characterised in that a respective said noise level is provided for each region, and the said noise level for each region is the highest noise level encountered in that region during the time in which active preparation of the masked template signals takes place.

2. Apparatus for use in processing signals derived from speech comprising
means for storing a plurality of masked template signals, each representing the frequency spectrum of a sound to be recognized and each represented by a masking level where a noise level found in preparing the template signals was greater than the input signals used in preparation,
means for estimating the input noise level,
means for deriving masked input signals during recognition by representing any region of the frequency spectrum of an input signal below noise level with a masking level which is representative of the noise level in that region, and
means for deriving a distance measure for each region of the frequency spectrum of input signals during recognition by comparing each region of each masked input signal with the corresponding region of the masked template signals,
characterised in that a respective said noise level is provided for each region, and the said noise level for each region is the highest noise level for that region found in preparing the template signals, and
the means for deriving a distance measure for each region does so according to the first of the following

5

rules and at least one other of them, considering corresponding regions:-

(a) if both the masked input and template signals are represented by unmasked signal levels, the distance measure is derived from those unmasked levels,

(b) if the masked input and template signals are represented by a masking level and an unmasked signal level, respectively, and if the masking level is greater than the unmasked level then the distance measure is given a predetermined value, otherwise the distance measure is derived from the masking and unmasked levels,

(c) if the marked input and template signals are represented by an unmasked signal level and a masking level, repsectively, the distance measure is derived from the unmasked and masking levels, and

(d) if both the masked and template signals are represented by masking levels, and if the input masking level is greater than the template masking level then the distance measure is given the same, or a different, predetermined value, otherwise the distance measure is derived from the masking levels.

3. A method of processing signals derived from speech comprising the steps of

storing a plurality of masked template signals, each representing the frequency spectrum of a sound to be recognized and each represented by a masking level where a noise level found in preparing the template signals was greater than the input signals used in preparation,

estimating the input noise level,

deriving masked input signals during recognition by representing any region of the frequency spectrum of an input signal below noise level with a masking level which is representative of the noise level in that region, and

deriving a distance measure for each region of the frequency spectrum of input signals during recognition by comparing each region of each masked input signal with the corresponding region of the masked template signals,

characterised in that a respective said noise level is provided for each region, and the said noise level for each region is the highest noise level for that region found in preparing the template signals, and

the step of deriving a distance measure for each region does so according to the first of the following rules and at least one other of them, considering corresponding regions:-

(a) if both the masked input and template signals are represented by unmasked signal levels, the distance measure is derived from those unmasked levels,

(b) if the masked input and template signals are represented by a masking level and an unmasked signal level, respectively, and if the masking level is greater than the unmasked level then the distance measure is given a predetermined value, otherwise the distance measure is derived from the masking and unmasked levels,

(c) if the marked input and template signals are represented by an unmasked signal level and a masking level, respectively, the distance measure is derived from the unmasked and masking levels, and

(d) if both the masked and template signals are represented by masking levels, and if the input masking level is greater than the template masking level then the distance measure is given the same, or a different, predetermined value, otherwise the distance measure is derived from the masking levels.

4. A method or apparatus according to any preceding claim characterised in that the spectral regions are channels derived by filters.

5. A method or apparatus according to Claim 2 or 3, or Claim 4 insofar as dependent on Claim 2 or 3, characterised in that each distance measure is derived by squaring the difference between the two levels from which it is derived.

6. Apparatus according to any of Claims 2, 4 or 5 characterised in that the means for estimating the noise input level includes a first microphone, and the means for deriving masked input levels includes a second separate microphone.

7. Apparatus according to any of Claims 2, 4 or 5 characterised in that the means for estimating the noise input level and the means for deriving masked input levels include a common microphone and common means for separating noise and noise plus speech.

0240329

Fig. 1

INPUT
NOISE SPECTRUM

INPUT
SPECTRUM

Fig. 2a

TEMPLATE
NOISE SPECTRUM

TEMPLATE
SPECTRUM

Fig. 2b

FREQ.

Fig. 2c

$0$    $(f-t)^2$    $(f-B)^2$    $0$

$(A-t)^2$    $(A-B)^2$    $(A-B)^2$

Distance